**Europäisches Patentamt**

**European Patent Office**

**Office européen des brevets**

(19)

(11) Veröffentlichungsnummer: **0 041 659**
**B1**

(12) # EUROPÄISCHE PATENTSCHRIFT

(45) Veröffentlichungstag der Patentschrift: 11.07.84

(51) Int. Cl.³: **C 01 B 33/28**

(21) Anmeldenummer: **81104109.4**

(22) Anmeldetag: **29.05.81**

(54) **Verfahren zur Verringerung der Teilchengrösse zeolithischer Natriumaluminiumsilikate.**

(30) Priorität: **06.06.80 DE 3021370**

(43) Veröffentlichungstag der Anmeldung:
**16.12.81 Patentblatt 81/50**

(45) Bekanntmachung des Hinweises auf die Patenterteilung:
**11.07.84 Patentblatt 84/28**

(84) Benannte Vertragsstaaten:
**AT BE CH DE FR GB IT LI LU NL SE**

(56) Entgegenhaltungen:
**CH - A - 584 570**
**DE - A - 2 447 021**
**DE - A - 2 704 310**
**DE - B - 1 038 017**
**DE - B - 1 218 415**

(73) Patentinhaber: **Henkel Kommanditgesellschaft auf Aktien, Postfach 1100 Henkelstrasse 67, D-4000 Düsseldorf-Holthausen (DE)**
Patentinhaber: **Degussa Aktiengesellschaft, Weissfrauenstrasse 9, D-6000 Frankfurt am Main 1 (DE)**

(72) Erfinder: **Just, Günther, Verdistrasse 48, D-4010 Hilden (DE)**
Erfinder: **Carduck, Franz-Josef, Dr., Landstrasse 18, D-5657 Haan (DE)**

## Beschreibung

Gegenstand der Erfindung ist ein Verfahren zur Verringerung der Teilchengrösse von grobkörnigen kristallinen zeolithischen Natriumaluminiumsilikaten des Typs NaA, die bei der Kristallisation eines aus Natriumaluminat und Natriumsilikat gebildeten Reaktionsgemisches in einer wässerigen alkalischen Suspension anfallen.

Die sogenannten Zeolithe bilden eine Mineralklasse kristallwasserhaltiger Alkalimetallaluminiumsilikate mit definierter Poren- und Hohlraumstruktur ihres Aluminiumsilikatgitters. Synthetische Zeolithe haben eine zunehmende technische Bedeutung gewonnen und werden beispielsweise als Kationenaustauscher vor allem zum Enthärten von Wasser, als Katalysatorträger bei chemischen Prozessen, als Trocken-, Trenn- oder Sorptionsmittel für Lösungsmittel und Gase (Molekularsiebe) sowie als heterogene anorganische *builder*-Stoffe in Wasch- und Reinigungsmitteln eingesetzt. Je nach Verwendungszweck sind strukturell unterschiedliche Zeolithtypen sowie ferner unterschiedliche Trocken- und Reinheitsgrade derselben erforderlich. Üblicherweise werden solche Zeolithe zunächst in ihrer Natriumform hergestellt und – falls erwünscht – anschliessend durch Kationenaustausch in andere Formen umgewandelt.

Im Hinblick auf die vorstehend erwähnten Anwendungszwecke hat insbesondere das zeolithische Natriumaluminiumsilikat vom Typ NaA technische Bedeutung erlangt. Die chemische Zusammensetzung dieses Zeolithtyps entspricht in etwa der Summenformel:

$$1 \pm 0,2 \; Na_2O \cdot 1 \; Al_2O_3 \cdot 2 \pm 0,5$$
$$SiO_2 \cdot 0 \; bis \; 6 \; H_2O.$$

Das charakteristische Röntgenbeugungsdiagramm des Zeoliths NaA ist beispielsweise in der DE-AS Nr. 1038017 beschrieben.

Für die meisten technischen Anwendungszwecke wird im allgemeinen ein sehr feinteiliger Zeolith mit einer möglichst engbandigen Korngrössenverteilung und einer mittleren Korngrösse unter 10 µm bevorzugt. Insbesondere bei Verwendung des Zeoliths NaA in Wasch- und Reinigungsmitteln soll darüber hinaus dessen Anteil an Teilchen mit einer Korngrösse oberhalb 50 µm – nachfolgend als Grit bezeichnet – nicht mehr als 0,2 Gew.-% betragen, bzw. unterhalb dieser Grenze liegen, sowie ferner dessen Kationenaustauschvermögen möglichst hoch sein.

Zeolithische Natriumaluminiumsilikate werden in der Regel durch diskontinuierliches oder auch kontinuierliches Vermischen einer wässerigen Natriumaluminatlösung mit einer wässerigen Natriumsilikatlösung in Gegenwart überschüssiger Natronlauge bei erhöhter Temperatur hergestellt. Durch anschliessendes Erhitzen des Reaktionsgemisches für einen gewissen Zeitraum werden die primär gebildeten röntgenamorphen Natriumaluminiumsilikate üblicherweise in die entsprechenden kristallinen zeolithischen Formen überführt. Je nach den Molverhältnissen der Reaktionspartner im Ansatz sowie der Temperaturführung erfordert die Bildung kristalliner Produkte einen Zeitraum von wenigen Minuten bis zu mehreren Tagen. Zur Gewinnung des Zeolithes NaA wird dieser Kristallisationsprozess vornehmlich unter Normaldruck und bei Temperaturen im Bereich von 70 bis 100° C vorgenommen. Auf diese Weise lassen sich bei einer entsprechenden Zusammensetzung des Reaktionsgemisches im allgemeinen hochkristalline Zeolithe des Typs NaA mit einem hohen Kationenaustauschvermögen gewinnen, die zunächst in Form einer wässerigen alkalischen Suspension anfallen.

Im Hinblick auf die erwünschten geringen Teilchengrössen des gebildeten Zeoliths NaA hat man bislang versucht, durch die Wahl bestimmter geeigneter Reaktionsparameter bei der Zeolithsynthese – wie Temperatur, Dauer des Vermischens der Reaktionspartner, Zusammensetzung des Reaktionsgemisches u. dgl. – den Gritanteil möglichst niedrig zu halten. Insbesondere ist in diesem Zusammenhang vorgeschlagen worden, während des Vermischens der Reaktionspartner und ggf. auch während des Kristallisationsschrittes starke Scherkräfte auf das Reaktionsgemisch einwirken zu lassen, um auf diese Weise der Bildung grobkörniger Produkte entgegenzuwirken. Zur Verringerung der Teilchengrösse hat man ferner versucht, die aus der Mutterlauge isolierten und getrockneten Zeolithkristalle in einer Kugelmühle zu mahlen und die hierbei anfallenden Fraktionen in einem Fliehkraftsichter zu trennen. Die geschilderten Massnahmen sind jedoch zumeist mit einem erheblichen technischen Aufwand verbunden und können darüber hinaus – aufgrund des speziellen und daher in mancherlei Hinsicht eingeschränkten Verfahrensablaufs- – ggf. zu einer verminderten Raum/Zeit-Ausbeute des gesamten Verfahrens führen. Trotz optimierter Verfahrensbedingungen resultieren hierbei üblicherweise Gritanteile im Bereich von 0,05 bis 0,3 Gew.-%, bezogen auf die Gesamtausbeute an Zeolith NaA.

Demgegenüber ist es die Aufgabe der vorliegenden Erfindung, ein Verfahren zur Gewinnung feinstteiliger zeolithischer Natriumaluminiumsilikate zu entwickeln, das einerseits einen hinsichtlich der Reaktionsparameter uneingeschränkten Verfahrensablauf mit einer hohen Raum/Zeit-Ausbeute ermöglicht sowie andererseits durch eine nachträgliche Verringerung der Teilchengrösse des gebildeten grobkörnigen Zeolithanteils zu einem möglichst gritarmen Zeolith NaA mit einem hohen Kationenaustauschvermögen führt, dessen Grobanteile weniger als 0,05 Gew.-% betragen. Insbesondere betrifft diese Aufgabenstellung die Gewinnung eines Zeoliths NaA mit einem Gritanteil – d.h. Teilchen mit einer Korngrösse oberhalb 50 µm – von weniger als 0,05 Gew.-%.

Gegenstand der Erfindung ist demnach ein Verfahren zur Verringerung der Teilchengrösse von grobkörnigen kristallinen zeolithischen Natriumaluminiumsilikaten des Typs NaA, die bei der Kristallisation eines aus Natriumaluminat und Natriumsilikat gebildeten Reaktionsgemisches in einer wässerigen alkalischen Suspension anfallen und durch ein hohes Kationenaustauschvermögen ausgezeichnet sind, welches dadurch gekennzeichnet ist, dass man die wässerige alkalische Suspension des kristallisierten Natriumaluminiumsilikats einer Behandlung auf einem Vibrationssieb mit einer Maschenweite von 25 bis 100 µm unterwirft, wobei die Antriebsdrehzahl des Vibrationssiebs sowie dessen Schwingungsamplitude so zu wählen sind, dass die das Sieb passierenden Natriumaluminiumsilikatteilchen zu mindestens 99,95 Gew.-% eine Teilchengrösse von weniger als 100 µm aufweisen.

Überraschenderweise wurde nämlich gefunden, dass durch die nachträgliche erfindungsgemässe Behandlung der Suspension des kristallinen zeolithischen Natriumaluminiumsilikats der bei der Synthese gebildete Anteil an grobkörnigen Zeolithteilchen wesentlich reduziert werden kann. Hierbei handelt es sich nicht etwa um ein reines Absieben dieses Grobanteils, sondern um eine effektive Verringerung der Teilchengrösse beziehungsweise Zerkleinerung der grobkörnigen Partikel durch die Siebbehandlung um mehr als 50 Gew.-%. Der Nachweis einer Verminderung des Grobanteils und damit auch der Wirkung des erfindungsgemässen Verfahrens lässt sich leicht und anschaulich aufzeigen, indem man eine Bestimmung des Gehaltes an grobkörnigen Teilchen in der Suspension vor sowie nach erfolgter Siebung vornimmt, wobei man sich zweckmässigerweise eines modifizierten Verfahrens zur Teilchengrössenbestimmung nach Mocker bedient, welches nachfolgend erläutert wird. Die mit Hilfe des erfindungsgemässen Verfahrens erzielbare Wirkung ist um so überraschender, da ja einerseits es bislang der Anwendung spezieller Verfahrensvarianten bei der Synthese beziehungsweise der Kristallisation bedurfte, um die kristallchemisch begünstige Bildung grobkörniger Zeolithpartikel von vornherein möglichst zu unterdrücken, sowie andererseits die einmal gebildeten Grobanteile nur schwierig wieder zu zerkleinern waren.

Die Vorteile des erfindungsgemässen Verfahrens sind insbesondere in den folgenden wesentlichen Punkten zu sehen: Zum einen lässt sich die eigentliche Synthese, d.h. das Vermischen der Reaktionspartner sowie der Kristallisationsschritt, ohne irgendwelche, die Raum/Zeit-Ausbeute des Verfahrens negativ beeinflussende Reaktionsparameter durchführen. So kann auch insbesondere auf die Anwendung starker Scherkräfte während des Vermischens oder Kristallisierens verzichtet werden, da ja die Bildung grobkörniger Zeolithteilchen in Kauf genommen werden kann. Zum anderen bedarf es keiner verfahrenstechnisch aufwendiger Mahlvorgänge, die ein Isolieren und Trocknen der erhaltenen Zeolithkristalle voraussetzen.

Zur Durchführung der erfindungsgemässen Verfahrens sind prinzipiell alle gebräuchlichen Vibrationssiebe geeignet, deren Konstruktion eine Nass/Trocken-Abscheidung des Siebgutes zulässt. Beispielsweise kommen hierfür entsprechende Maschinen der Fa. Russell Finex, Zaventem, Belgien, in Frage.

Die für die Leistung eines solchen Vibrationssiebes wesentliche Vibrationsfrequenz wird massgeblich durch die Antriebsdrehzahl des die Siebbewegung verursachenden Elektromotors sowie durch die Amplitudengrösse der Siebschwingung bestimmt. Für die Wahl dieser Variablen ist im Zusammenhang mit dem erfindungsgemässen Verfahren der hierbei zu erzielende Effekt von Bedeutung, d.h., dass diese Variablen so einzustellen sind, dass die das Sieb passierenden Zeolithteilchen zu mindestens 99,95 Gew.-% eine Teilchengrösse von weniger als 100 µm aufweisen. Ferner sollten diese Variablen vorteilhafterweise so gewählt werden, dass nur ein möglichst minimaler Rückstand auf dem Sieb verbleibt.

Dieser Effekt lässt sich in technisch einfach durchführbarer Weise mit Hilfe einer modifzierten Nasssiebung nach Mocker überprüfen bzw. nachweisen, indem man den Anteil an grobkörnigen Teilchen in der das Sieb passierenden Suspension ermittelt. Hierbei wird eine abgewogene, mit Wasser aufgeschlämmte Probe des gebildeten kristallinen Materials in einem Prüfgerät nach Mocker (DIN 53 580) auf ein Prüfsieb mit einer Maschenweite von 100 µm (DIN 4188) überführt und mit Hilfe von aus rotierenden Düsen versprühtem Wasser aufgewirbelt. Die Feinanteile des kristallinen Materials werden auf diese Weise drucklos durch das Prüfsieb gespült, während die Grobanteile auf dem Sieb zurückbleiben. Nach einer Dauer von 2 min, bei einer versprühten Wassermenge von 80 l/h, wird das Prüfsieb im Trockenschrank bei 110° C getrocknet und anschliessend durch Differenzwägung der Siebrückstand ermittelt. Der Siebrückstand ergibt sich hierbei nach der Formel:

$$\text{Gewichtsprozent Siebrückstand} = \frac{(a-b)\cdot 100}{E}$$

mit a = Gewicht des Siebes mit Rückstand;
      b = Gewicht des Siebes ohne Rückstand, und
      E = Probeneinwaage in Gramm, bezogen auf
           trockenes Material.

Auf diese Weise lassen sich die Wirkung der erfindungsgemässen Siebbehandlung auf die Verringerung der Teilchengrösse der grobkörnigen Zeolithpartikel leicht ermitteln und die die Leistung des Vibrationssiebes beeinflussenden Variablen dementsprechend einstellen bzw. korrigieren.

Ähnliches gilt prinzipiell auch für die Dauer der Behandlung der die grobkörnigen Anteile enthaltenden Suspension auf dem Vibrationssieb; d.h., dass die Behandlungsdauer praktisch einzig und alleine von dem vorstehend erläuterten Effekt bestimmt wird und in Abstimmung mit diesem Effekt zu wählen ist. Generell lässt sich hierzu sagen, dass eine längere Behandlungsdauer der Suspension auf dem Vibrationssieb einer Verminderung der grobkörnigen Zeolithteilchen zugute kommt.

Hinsichtlich der gewählten Maschenweite des Vibrationssiebes ist folgendes zu berücksichtigen: Die Angabe über die Maschenweite des Siebes von beispielsweise 50 µm sagt lediglich aus, dass die Siebmaschen im Mittel Öffnungen von 50 µm aufweisen. Da es sich bei diesen Sieben um technische Gewebe handelt, kann nicht eine gleich-

mässige Maschenweite vorausgesetzt werden, sondern es sind auch durchaus Abweichungen der angegebenen Maschenweite zu berücksichtigen, die erst ein Passieren von Partikeln mit einer Teilchengrösse von mehr als 50 µm bedingen.

Für die Wahl eines für das erfindungsgemässe Verfahren geeigneten Siebes ist ferner der Alkalibeständigkeit des Maschengewebes Achtung zu schenken, da es sich bei dem zu behandelnden Gut im allgemeinen um eine stark alkalische Suspension handelt.

Den vorstehenden Ausführungen entsprechend, können für das erfindungsgemässe Verfahren Siebmaschenweiten im Bereich von 25 bis 100 µm Verwendung finden — je nach der beabsichtigten und im Rahmen des Gesamtverfahrens erwünschten Feinteiligkeit der zu gewinnenden Zeolithpartikel. Im Hinblick auf eine Verminderung des Gritanteils des gebildeten Zeoliths NaA — d.h., derjenigen Teilchen mit einer Korngrösse von über 50 µm — ist es jedoch im Sinne des erfindungsgemässen Verfahrens besonders bevorzugt, dass man die Suspension einer Behandlung auf einem Vibrationssieb mit einer Maschenweite von 50 µm unterwirft, wobei die Antriebsdrehzahl des Vibrationsseiebs sowie dessen Schwingungsamplitude so zu wählen sind, dass die das Sieb passierenden Natriumaluminiumsilikatteilchen zu mindestens 99,95 Gew.-% eine Teilchengrösse von weniger als 50 µm aufweisen.

Die die Leistung des Vibrationssiebes bestimmenden Variablen werden analog den vorstehenden Ausführungen aufgrund des zu erzielenden Effektes festgelegt, der sich — wie beschrieben — nach der modifizierten Nasssiebung nach Mocker mit Hilfe eines Prüfsiebes mit einer Maschenweite von 50 µm (DIN 4188) bestimmen und überprüfen lässt.

Gemäss dieser bevorzugten Verfahrensweise resultiert mithin ein Zeolith NaA mit einem Gritanteil von nicht mehr als 0,05 Gew.-%; ein im Hinblick auf die Verwendung des Zeoliths in Wasch- und Reinigungsmitteln bedeutsamer Vorteil.

Generell lassen sich alle der nach den herkömmlichen Zeolithsynthesen gewonnenen Zeolithe des Typs NaA gemäss dem Verfahren nach der Erfindung hinsichtlich ihrer Teilchengrösse aufbereiten. Dies besagt mit anderen Worten, dass die Art und Weise der Herstellung — ob kontinuierlich oder diskontinuierlich — sowie die Festlegung der Reaktionsparameter für die Durchführung des erfindungsgemässen Verfahrens sowie für dessen Wirkung ohne Bedeutung sind. Bekanntlich führt jedoch eine beträchtliche Verdünnung des Reaktionsgemisches, d.h. ein hoher Wassergehalt, ohnehin zu relativ gritarmen Produkten, die an sich einer Nachbehandlung in der erfindungsgemässen Weise nicht unbedingt bedürfen. Ein solch relativ hoher Wassergehalt führt jedoch gleichzeitig zu einer verminderten Raum/Zeit-Ausbeute des Verfahrens. Demgegenüber bedingt ein geringer Wassergehalt des Reaktionsgemisches zwar einerseits verbesserte Raum/Zeit-Ausbeuten andererseits jedoch auch eine verstärkte Bildung von Grit.

In diesem Sinne ist es daher im Rahmen des erfindungsgemässen Verfahrens bevorzugt, dass man eine Suspension, die nach erfolgter Kristallisation eines Reaktionsgemisches mit einer rechnerischen Gesamtzusammensetzung hinsichtlich der Molverhältnisse von

$$2,5 \text{ bis } 5 \text{ Na}_2\text{O} : 1 \text{ Al}_2\text{O}_3 : 1,8 \text{ bis } 2 \text{ SiO}_2 : 50 \text{ bis } 100 \text{ H}_2\text{O}$$

anfällt, der Behandlung auf einem Vibrationssieb unterwirft. Im Hinblick auf eine verbesserte Raum/Zeit-Ausbeute der Zeolithsynthese kommen daher die Vorteile des erfindungsgemässen Verfahrens insbesondere bei derartigen Zusammensetzungen des Reaktionsgemisches zur Geltung.

Weiterhin ist es im Interesse einer möglichst hohen Raum/Zeit-Ausbeute der gesamten Zeolithsynthese sinnvoll und vorteilhaft, das erfindungsgemässe Verfahren unmittelbar an den erfolgten Kristallisationsprozess anzuschliessen und die wässerige alkalische Suspension des frisch kristallisierten Natriumaluminiumsilikats einer Behandlung auf dem Vibrationssieb zu unterwerfen. Es hat sich jedoch gezeigt, dass auch eine gewisse Alterung der Suspension und damit der in ihr enthaltenen Gritanteile die Wirkung des erfindungsgemässen Verfahrens nicht beeinträchtigt. Dies ist im Hinblick auf eine möglicherweise erforderliche Zwischenlagerung des frisch kristallisierten Produktes von gewisser Bedeutung. Insofern kann die Suspension auch noch im Verlaufe von beispielsweise 5 h nach erfolgter Kristallisation in der erfindungsgemässen Weise behandelt werden. Im Sinne des erfindungsgemässen Verfahrens ist es jedoch bevorzugt, dass man die Suspension unmittelbar im Anschluss an die Kristallisation der Behandlung auf einem Vibrationssieb unterwirft.

Auf diese Weise resultiert nach vollendeter Zeolithsynthese und Kristallisation sowie nach Durchführung des erfindungsgemässen Verfahrens eine wässerig alkalische Suspension feinstteiliger kristalliner zeolithischer Natriumaluminiumsilikate vom Typ NaA, die sich vorzugsweise durch einen Gritanteil von weniger als 0,05 Gew.-% sowie durch ein hohes Kationenaustauschvermögen auszeichnen.

Zur Charakterisierung des erhaltenen Kristallisats werden Produktproben abfiltriert, alkalifrei gewaschen, über Nacht im Vakuumtrockenschrank bei 100° C getrocknet und anhand ihres Röntgenbeugungsdiagrammes identifiziert. Die Zusammensetzung bezüglich $\text{Na}_2\text{O}$, $\text{Al}_2\text{O}_3$ und $\text{SiO}_2$ lässt sich röntgenfluoreszenzanalytisch ermitteln. Der Wassergehalt kann über den Glühverlust einer Kristallisatprobe nach einer Stunde bei 800° C bestimmt werden. Ggf. wird die Korngrössenverteilung als Volumenprozentverteilung der Kristallisatteilchen mittels eines Coulter-Counter®-Gerätes, beispielsweise Modell TA, gemessen. Die Bestimmung des Gritanteils im Kristallisat erfolgt durch die vorstehend beschriebene modifizierte Nasssiebung nach Mocker.

Als Mass für das Kationenaustauschvermögen des kristallinen zeolitschen Materials wird das Calciumbindevermögen von 1 g Zeolith NaA in 1 l

Wasser einer Ausgangshärte von 30° dH (deutsche Härte) herangezogen. Zur Bestimmung des Calciumbindevermögens wird 1 l einer wässerigen, 0,594 g $CaCl_2$ (entsprechend 300 mg CaO/l = 30° dH) enthaltenden Lösung mit verdünnter Natronlauge auf einen pH-Wert von 10 eingestellt und mit 1 g trockenem Zeolith NaA versetzt. Die gebildete Suspension wird anschliessend für die Dauer von 15 min bei einer Temperatur von $22 \pm 2°$ C kräftig gerührt. Nach Abfiltrieren des Zeoliths wird die Resthärte X im Filtrat durch komplexometrische Titration mittels Ethylendiamintetraessigsäure ermittelt. Das Calciumbindevermögen in Milligramm CaO pro Gramm Zeolith errechnet sich hieraus nach der Formel:

$$(30-X) \cdot 10$$

Die erfindungsgemäss gewonnene Suspension feinstteiliger, gritarmer, kristalliner zeolithischer Natriumaluminiumsilikate vom Typ NaA wird in der Regel weiter aufbereitet. Hierzu wird beispielsweise der kristalline Feststoff abfiltriert, gewaschen und getrocknet oder je nach dem angestrebten Verwendungszweck in sonstiger gebräuchlicher Weise konfektioniert. So kann ggf. auch eine wässerige, alkalifreie Suspension des kristallinen Natriumaluminiumsilikats zur Herstellung von Wasch- und Reinigungsmitteln Verwendung finden. Mutterlauge und Waschwässer werden mit Vorteil in den Herstellungsprozess zurückgeführt.

Aufgrund des geringen Gritanteils von weniger als 0,05 Gew.-% sowie des hohen Kationenaustauschvermögens, das in einem Calciumbindevermögen im Bereich von 150 bis 200 mg CaO pro Gramm Zeolith zum Ausdruck kommt, wird das gewonnene zeolithische Natriumaluminiumsilikat vorzugsweise als heterogener anorganischer *builder*-Stoff (Phosphatsubstitut) in Wasch-, Spül- und Reinigungsmitteln eingesetzt.

In den nachfolgenden Beispielen wird die Durchführung des erfindungsgemässen Verfahrens näher erläutert.

*Beispiel 1*

In einem mit einem Rührer ausgestatteten Reaktionsbehälter werden 275 kg Natriumsilikatlösung und 568 kg Natronlauge vorgelegt und bei einer Temperatur von 70° C rasch mit 658 kg Natriumaluminatlösung versetzt. Die Zusammensetzung der einzelnen Reaktionskomponenten ist dabei so gewählt, dass die Zusammensetzung des Reaktionsgemisches Molverhältnissen von

$$4 \, Na_2O : 1 \, Al_2O_3 : 1,8 \, SiO_2 : 75 \, H_2O$$

entspricht. Das Reaktionsgemisch wird anschliessend auf 85° C aufgeheizt und das primär gebildete amorphe Produkt bei dieser Temperatur innerhalb von 30 min in ein kristallines Natriumaluminiumsilikat überführt.

Eine aufgearbeitete Probe des erhaltenen kristallinen Reaktionsproduktes erweist sich laut Röntgenbeugungsanalyse als hochkristalliner Zeolith vom Typ NaA mit einem Calciumbindevermögen von 168 mg CaO pro Gramm Zeolith und einem Gritgehalt von 1,1 Gew.-%.

Die gesamte Suspension des kristallinen Produktes wird anschliessend auf ein Hochleistungsvibrationssieb der Firma Russel Finex, Typ Air Finex 22 MK II, aufgegeben, welches mit einem $V_4A$-Stahlsieb einer Maschenweite von 50 µm ausgestattet ist. Das Vibrationssieb wird mit 2800 tr/min und einer Schwingungsamplitude von 6 mm betrieben.

Nach erfolgter Siebung fällt ein Siebrückstand von 1,3 kg, bezogen auf wasserfreies Material, an. Die das Sieb passierende Suspension weist einen Gritgehalt von 0,02 Gew.-% auf. Dies entspricht einem während des Siebvorganges erfolgten Gritabbau in Höhe von 52%, bezogen auf die Gesamtmenge an Grit in der Suspension vor der Siebung, wie die nachstehende Bilanz zeigt:

1. Ansatzmenge                                          1501 kg
2. Zeolithausbeute
   (wasserfrei)          226 kg (15 Gew.-% von 1)
3. Gritgehalt vor dem Sieben
   (wasserfrei)          2,7 kg (1,1 Gew.-% von 2)
4. Gritgehalt nach dem Sieben (Siebrückstand, wasserfrei)          1,3 kg (48 Gew.-% von 3)
5. Gritabbau          1,4 kg (52 Gew.-% von 3)

Dieses Beispiel zeigt eindeutig die Wirkung des erfindungsgemässen Verfahrens hinsichtlich der Verminderung der Teilchengrösse des Zeoliths, die einerseits in dem geringen restlichen Gritgehalt der Suspension von 0,02 Gew.-% sowie andererseits in dem erzielten Gritabbau zum Ausdruck kommt.

*Beispiel 2*

Zur Zeolithsynthese findet in diesem Beispiel eine vertikal angeordnete Rührkolonne Verwendung (Nutzvolumen 188 l), die durch Zwischenböden in insgesamt 28 Kammern unterteilt und mit der gleichen Anzahl von MIG-Rührern ausgestattet ist. Diese Rührkolonne erlaubt ein kontinuierliches Vermischen. Mit Hilfe geeigneter Dosiervorrichtungen werden die auf eine Reaktionstemperatur von 60° C vorgeheizten Reaktionskomponenten synchron in die unteren Kammern der Rührkolonne eingespeist. Die Fortbewegung des Reaktionsgemisches von Kammer zu Kammer erfolgt durch versetzt zueinander angeordnete Ringspalte in den Zwischenböden, so dass insgesamt ein kontinuierlich aufsteigender Produktstrom innerhalb der Kolonne resultiert. Die Dosierung der Reaktionskomponenten beträgt 400 kg/h Natriumsilikatlösung, 600 kg/h verdünnte Natronlauge sowie 873 kg/h Natriumaluminatlösung. Die Zusammensetzung der einzelnen Reaktionskomponenten ist dabei so gewählt, dass die Zusammensetzung des Reaktionsgemisches Molverhältnissen von

$$3,6 \, Na_2O : 1 \, Al_2O_3 : 1,8 \, SiO_2 : 80 \, H_2O$$

entspricht. Das Reaktionsgemisch wird anschliessend auf 90° C aufgeheizt und das primär gebildete amorphe Produkt bei dieser Temperatur kontinuierlich innerhalb von 30 min in ein kristallines Natriumaluminiumsilikat überführt.

Eine aufgearbeitete Probe des erhaltenen kristallinen Reaktionsproduktes erweist sich laut Röntgenbeugungsanalyse als hochkristalliner Zeolith vom Typ NaA mit einem Calciumbindevermögen von 176 mg CaO pro Gramm Zeolith und einem Gritgehalt von 0,7 Gew.-%.

Die gesamte Suspension des kristallinen Produktes wird anschliessend auf ein Hochleistungsvibrationssieb der Firma Russel Finex, Typ 22 HD, aufgegeben, welches mit einem $V_4A$-Stahlsieb einer Maschenweite von 50 µm ausgestattet ist. Das Vibrationssieb wird mit 2800 tr/min und einer Schwingungsamplitude von 6 mm betrieben.

Hierbei fällt ein Siebrückstand von 0,8 kg/h, bezogen auf wasserfreies Material, an. Die das Sieb passierende Suspension weist einen Gritgehalt von 0,01 Gew.-% auf. Dies entspricht einem während des Siebvorganges erfolgten Gritabbau in Höhe von 58%, bezogen auf die Gesamtmenge an Grit in der Suspension vor der Siebung, wie die nachstehende Bilanz zeigt:

1. Ansatzmenge      1873 kg/h
2. Zeolithausbeute
   (wasserfrei) 271,4 kg/h (14,5 Gew.-% von 1)
3. Gritgehalt vor dem Sieben
   (wasserfrei)     1,9 kg/h (0,7 Gew.-% von 2)
4. Gritgehalt nach dem Sieben (Siebrückstand, wasserfrei)     0,8 kg/h (42 Gew.-% von 3)
5. Gritabbau     1,1 kg/h (58 Gew.-% von 3)

Auch diesem Beispiel ist die Wirkung des erfindungsgemässen Verfahrens hinsichtlich der Verminderung der Teilchengrösse der grobkörnigen Zeolithanteile zu entnehmen.

## Patentansprüche

1. Verfahren zur Verringerung der Teilchengrösse von grobkörnigen kristallinen zeolithischen Natriumaluminiumsilikaten des Typs NaA, die bei der Kristallisation eines aus Natriumaluminat und Natriumsilikat gebildeten Reaktionsgemisches in einer wässerigen alkalischen Suspension anfallen und durch ein hohes Kationenaustauschvermögen ausgezeichnet sind, dadurch gekennzeichnet, dass man die wässerig alkalische Suspension des kristallisierten Natriumaluminiumsilikats einer Behandlung auf einem Vibrationssieb mit einer Maschenweite von 25 bis 100 µ unterwirft, wobei die Antriebsdrehzahl des Vibrationssiebs sowie dessen Schwingungsamplitude so zu wählen sind, dass die das Sieb passierenden Natriumaluminiumsilikatteilchen zu mindestens 99,95 Gew.-% eine Teilchengrösse von weniger als 100 µm aufweisen.

2. Verfahren nach Anspruch 1, dadurch gekennzeichnet, dass man die Suspension einer Behandlung auf einem Vibrationssieb mit einer Maschenweite von 50 µm unterwirft, wobei die Antriebsdrehzahl des Vibrationssiebs sowie dessen Schwingungsamplitude so zu wählen sind, dass die das Sieb passierenden Natriumaluminiumsilikatteilchen zu mindestens 99,95 Gew.-% eine Teilchengrösse von weniger als 50 µm aufweisen.

3. Verfahren nach den Ansprüchen 1 und 2, dadurch gekennzeichnet, dass man die Suspension, die nach erfolgter Kristallisation eines Reaktionsgemisches mit einer rechnerischen Gesamtzusammensetzung hinsichtlich der Molverhältnisse von

$$2,5 \text{ bis } 5 \text{ Na}_2\text{O} : 1 \text{ Al}_2\text{O}_3 : 1,8 \text{ bis } 2 \text{ SiO}_2 : 50 \text{ bis } 100 \text{ H}_2\text{O}$$

anfällt, der Behandlung auf einem Vibrationssieb unterwirft.

4. Verfahren nach den Ansprüchen 1 bis 3, dadurch gekennzeichnet, dass man die Suspension unmittelbar im Anschluss an die Kristallisation der Behandlung auf einem Vibrationssieb unterwirft.

## Claims

1. A process for reducing the particle size of coarse-grained crystalline zeolitic sodium aluminium silicates of the NaA type which accumulate during the crystallization of a reaction mixture of sodium aluminate and sodium silicate in an aqueous alkaline suspension and which are distinguished by a high cation-exchange capacity, characterized in that the aqueous alkaline suspension of the crystallized sodium aluminium silicate is subjected to a treatment on a vibrating sieve having a mesh width of from 25 to 100 µm, the rotational speed at which the vibrating sieve is driven and its amplitude of vibration having to be selected in such a way that at least 99.95% by weight of the sodium aluminium silicate particles passing through the sieve have a particle size of less than 100 µm.

2. A process as claimed in Claim 1, characterized in that the suspension is subjected to a treatment on a vibrating sieve having a mesh width of 50 µm, the rotational speed at which the vibrating sieve is driven and its amplitude of vibration having to be selected in such a way that at least 99.95% by weight of the sodium aluminium silicate particles passing through the sieve have a particle size of less than 50 µm.

3. A process as claimed in Claims 1 and 2, characterized in that the suspension which accumulates after the crystallization of a reaction mixture having a theoretical overall composition in regard to the molar ratios of

$$2.5 \text{ to } 5 \text{ Na}_2\text{O} : 1 \text{ Al}_2\text{O}_3 : 1.8 \text{ to } 2 \text{ SiO}_2 : 50 \text{ to } 100 \text{ H}_2\text{O}$$

is subjected to the treatment on a vibrating sieve.

4. A process as claimed in Claims 1 to 3, characterized in that the suspension is subjected to the treatment on a vibrating sieve immediately after crystallization.

## Revendications

1. Procédé pour réduire la dimension de particule de silicates de sodium/aluminium zéolitiques cristallins en gros grains, du type NaA, que l'on rencontre dans la cristallisation d'un mélange de réaction formé d'aluminate de sodium et de silicate de sodium dans une suspension alcaline aqueuse et qui sont caractérisés par un pouvoir élevé d'échange de cations, caractérisé en ce qu'on soumet la suspension alcaline aqueuse du silicate de sodium/aluminium cristallisé à un traitement sur un tamis vibrant ayant une largeur de maille de 25 à 100 μm, en choisissant le nombre de tours d'entraînement du tamis vibrant, ainsi que son amplitude d'oscillation, pour que les particules de silicate de sodium/aluminium passant à travers le tamis présentent, à concurrence d'au moins 99,95% en poids, une dimension de particule inférieure à 100 μm.

2. Procédé selon la revendication 1, caractérisé en ce qu'on soumet la suspension à un traitement sur un tamis vibrant ayant une largeur de maille de 50 μm, en choisissant le nombre de tours d'entraînement du tamis vibrant, de même que son amplitude d'oscillation, pour que les particules de silicate de sodium/aluminium passant à travers le tamis présentent, à concurrence d'au moins 99,95% en poids, une dimension de particule inférieure à 50 μm.

3. Procédé selon les revendications 1 et 2, caractérisé en ce qu'on soumet au traitement sur un tamis vibrant la suspension qui est obtenue après exécution de la cristallisation d'un mélange ayant une composition globale calculée quant aux proportions molaires de

2,5 à 5 $Na_2O$ : 1 $Al_2O_3$ : 1,8 à
2 $SiO_2$ : 50 à 100 $H_2O$.

4. Procédé selon les revendications 1 à 3, caractérisé en ce qu'on soumet la suspension au traitement sur un tamis vibrant directement à la suite de la cristallisation.